# EUROPEAN PATENT SPECIFICATION

(11) **EP 1 436 542 B1**
(45) Date of publication and mention of the grant of the patent: **01.03.2006**
(21) Application number: 02800894.4
(22) Date of filing: 03.10.2002
(51) Int. Cl.: F16L 37/084, B29C 45/14

(54) **PIPE CONNECTOR WITH EMBEDDED SEAL AND METHOD OF MANUFACTURE**
ROHRVERBINDER MIT EINGEBETTETER DICHTUNG UND HERSTELLUNGSVERFAHREN
RACCORD DE TUYAUX AVEC JOINT INTEGRE ET PROCEDE DE FABRICATION

(30) Priority: 10.10.2001 US 975917
(43) Date of publication of application: 14.07.2004
(60) Divisional application: 05076206.1
(73) Proprietor: Flex Technologies, Inc., Midvale, OH 44653 (US)
(72) Inventor: WELSH, Thomas, L., Newcomerstown, OH 43832 (US); BURKET, Glenn, E., Dover, OH 44622 (US); DICK, Joseph, F., New Philaddelphia, OH 44663 (US)
(74) Representative: Dawson, Elizabeth Ann
(86) International application number: PCT/US2002/031629
(87) International publication number: WO 2003/031861

(56) References cited:
- FR-A- 2 757 442
- US-A- 793 103
- US-A- 4 863 201
- US-A- 5 799 986

## Description

### TECHNICAL FIELD

This invention relates to a connector for use in fluid and vapor transmissions that can be quickly connected and disconnected from a tubular conduit but which can provide an effective seal between the connector and the tubular conduit. More particularly, this invention relates to a connector formed of a single material surrounding a seal ring which limits leakage through the seal between the connector and the conduit. Most particularly, this invention relates to a connector and its method of manufacture which allows the connector to be molded around the seal ring without requiring further assembly to retain or load the seal ring.

### BACKGROUND OF THE INVENTION

In many industries connectors are used to provide connections between fluid carrying conduits. For ease of use, these connectors are designed to allow quick connection and disconnection. The quick disconnection and connection feature allows such connectors to be used in confined spaces where more cumbersome connectors would be prohibited.

In general, these connectors have either a one-piece or two-piece configuration. Those having a one-piece configuration are generally molded of one type of plastic or organic polymer material, and conduits are attached in a bayonet fashion to barbed ends of the connector. In this configuration, sealing is effected at the interface between this plastic or inorganic polymer material and the material of the conduit. The one piece connector is attractive because it may be manufactured in a single molding step making the production of such connectors relatively inexpensive. Unfortunately, the interfacing or the conduit and connector does not provide a reliable seal.

As a result, two-piece configurations using a seal ring between the conduit and connector have been developed. In the two piece configuration, a seal ring contained between either of the two-pieces have been used to provide better sealing. Instead of relying on interface between the connector and the conduit, the seal ring provides effective protection against leakage. However, when compared to the manufacturing process of a one-piece configuration, the manufacturing process of the two-piece configuration is quite difficult.

In one known manufacturing process, three parts, namely, a connector body, a seal ring retainer, and a seal ring are manufactured separately. In this process the connector body and retainer are separately formed. Then, the seal ring is inserted into the connector body and the seal ring retainer is next inserted to load and hold the seal ring in the proper location within the connector body. A second process utilizes a seal ring and an inner ring placed on a mandrel which is inserted into an injection mold. In this process, the connector body part is molded around the seal ring and the inner ring. In each case, a separate assembly process is necessary to locate and load the seal ring. Consequently, the manufacturing of the two-piece configuration is more difficult, time consuming, and expensive to manufacture than the one-piece configurations. Overall, each configuration, one and two pieces, has inherent trade-offs. The one-piece design sacrifices sealing ability for ease of manufacture, and the two-piece design sacrifices ease of manufacture for improved sealing ability.

Consequently, there is a need for a cost-effective connector that provides a more reliable seal, relative to existing one piece connectors.

FR-A-2757442 discloses a connector according to the preamble of claim 1 comprising a hollow member having first and second open ends joined by a bore. An annular channel inside the bore accommodates an annular seal in such a way that the seal protrudes into the bore. One end of the connector has a ribbed outer surface for receiving a conduit.

The present invention provides a connector as described in claim 1.

In the preferred embodiment the connector of the invention comprises as hollow member having an open first end and an open second end joined by a bore extending through body having a first bore section and a second bore section that is stepwise reduced from the first bore section creating an annular shoulder therebetween, the first bore section tapering inwardly from the shoulder toward a third bore section, a sealing member receiver integrally formed into the connector and located within the second bore section near the third bore section, and a sealing member seated within the sealing member receiver and at least partially protruding inwardly into the second bore section.

The connector is preferably manufactured by providing a mold, the mold defining a cavity and an insert assembly located within the cavity, providing a sealing member within the mold contacting the insert assembly and partially exposed to the cavity, compressing the sealing member such that contacts between the insert assembly and sealing member is maintained as the connector is molded, and providing molten plastic material into the mold cavity to form the connector.

### BRIEF DESCRIPTION OF THE DRAWINGS

Fig. 1 is a partially sectioned side elevational view of a connector according to the concepts of the present invention shown with a male end form inserted therein depicting details of the connector bore and sealing of the male end form within the connector;
Fig. 2 is front sectional view taken along line 2-2 in Fig. 1 of a connector according to the present invention depicting details of the first end of the connector including details of a retaining clip used to secure the male end form within the first end of the connector;
Fig. 3 is fragmented sectional side elevational view of a connector according to the present invention depicting details of the second end of the connector shown with an optional sealing member located thereon;
Fig. 4 is a plan view of a connector according to the present invention depicting details of first and second retaining assemblies located at opposite ends of the connector;
Fig. 5 is a left side elevational view of a connector according to the present invention with an internal seal shown in hidden lines;
Fig. 6 is an enlarged front elevational view of a lock ring with portions of the connectors schematically shown;
Fig. 7 is a partially sectioned side elevational view of an alternative embodiment of the present invention depicting details of an elbow-shaped connector;
Fig. 8 is a partially sectioned front elevational view of the connector depicted in Fig. 7 showing further details of the elbow-shaped connector according to the present invention;
Fig. 9 is a partially schematic sectional view of a connector according to the present invention and die depicting a portion of the method of forming a connector;
Fig. 10 is a partially schematic sectional view of a connector and die similar to that depicted in Fig. 9 shown with the die closed and the sealing member compressed;
Fig. 11 is a partially schematic sectional view similar to Fig. 10 with the mold open depicting the formed connector located on an insert assembly; and
Fig. 12 is a partially schematic sectional view similar to Fig.11 depicting ejection of the connector from the mold.

### PREFERRED EMBODIMENTS FOR CARRYING OUT THE INVENTION

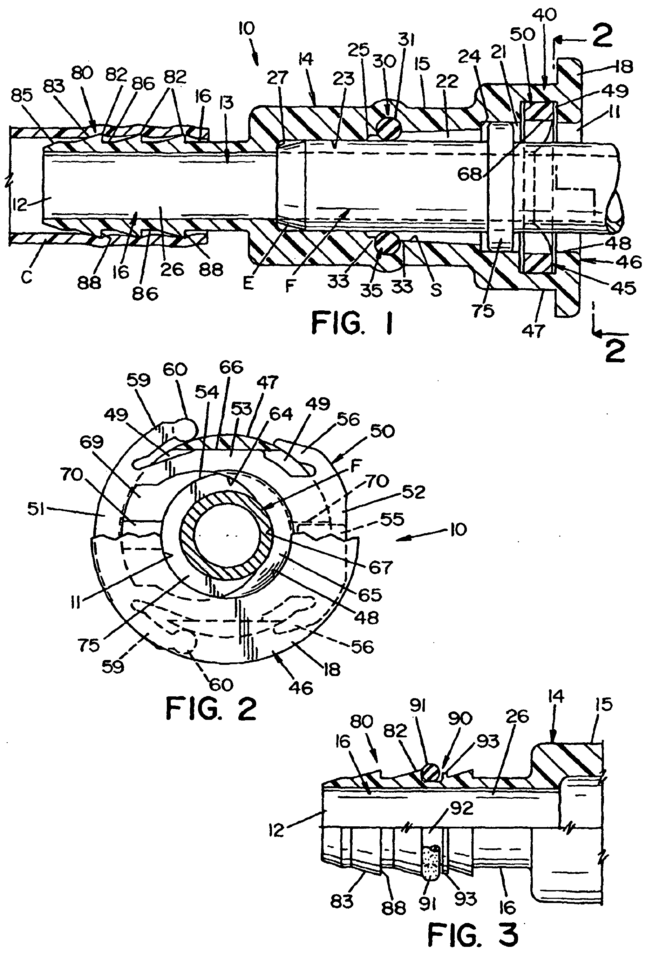

A first embodiment of the connector according to the concepts of the present invention as indicated generally be the numeral 10, and is shown particularly in Figs. 1-6. Connector 10 generally is a hollow member having an open first end 11 and an open second end 12 joined by a bore 13 extending through the body 14 of connector 10. In the embodiment shown, the bore 13 is divided into a first tubular section 15 and a second tubular section 16 coaxially oriented with respect to each other. First and second tubular sections 15, 16 may be of the same diameter or different diameters as shown. As best shown in Fig. 1, first section 15 is of a larger diameter than second section 16 and includes a series of step-like reductions in the diameter of first section 15, as described more completely below.

The body 14 defines a series of four sections of differing diameter. Near the end 11, the first tubular section 15 defines a first bore section 21. A second bore section 22 is defined adjacent the first bore section 21 and is formed by an initial step inwardly of the first tubular section 15 defining an annular shoulder 24. From shoulder 24 the second bore section 22 has an inwardly sloping surface S that transcends a gradual decrease in diameter toward the third bore section 23. At the third bore section 23 the interior surface of first tubular section 15 undergoes another step decrease in diameter to the third bore section 23 defining a second annular shoulder or flange 25. Flange 25 has an inner diameter corresponding to the diameter of bore section 23 and an outer diameter corresponding approximately to the diameter or bore section 22. These diameters are closely toleranced such that a sealing relationship between a male end form F and the bore section 23 is maintained, as will be described hereinbelow.

As previously mentioned, the second tubular section 16 is of a lesser diameter than first tubular section 15 and accordingly, the bore fourth section 26 formed in the second tubular section 16 is of a lesser diameter than the third bore section 23 resulting in an annular shoulder 27 near the boundary of the two sections 15, 16. Overall, in the embodiment shown, the bore 13 undergoes a stepped reduction in diameter from the first opening 11 to the exit opening or second opening 12.

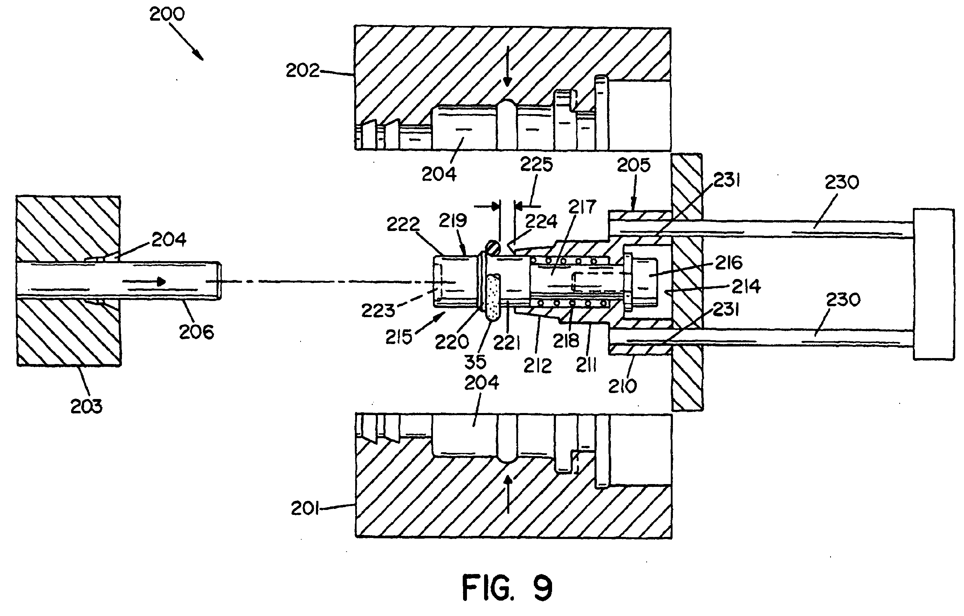

The first tubular section 15 is further provided with a sealing member receiver, generally indicated by the numeral 30, which may be an annular recess 31 generally having opposing shoulders 33 between which a sealing member, generally indicated by the numeral 35, is seated. The sealing member 35 may be any of a number of commercially available devices including an elastomeric O-ring, as shown. The sealing member receiver 30 is located adjacent the flange 25. The close tolerancing of the bore section diameters and flange 25 effectively control the seal offered by the sealing member 35 to ensure a good seal between the male end form F and sealing member 35. Since only the diameters ahead of the sealing member need to be closely toleranced, the bore section 22 behind sealing member 35, is enlarged to accommodate the retraction of a pin assembly 215 used in the molding of connector 10 (Figs. 9-12).

To secure tubular members, such as conduits C or male end form F, to the connector 10, each of the first and second ends 11, 12 may be provided with a retainer assembly, generally indicated by the numeral 40. Retainer assembly 40 may be of a latch or clip-type retaining assembly, generally indicated by the numeral 45, and employed at the first end 11 of the connector 10. One such retainer 45 is described in U.S. Patent No. 5,799,986. To accommodate the latch retaining assembly 45, connector 10 is formed with a latching end, indicated generally by the numeral 46, formed adjacent open end 11. Latching end 46 includes a cylindrical shaped front housing 47 formed with a stepped bore 48. Housing 47 may have various other surface shapes, including an enlarged diameter front cylindrical portion 18 and a reduced diameter cylindrical rearward portion adjacent thereto. A pair of similar opposed apertures 49 are formed in the reduced diameter portion and have an arcuate shape for receiving a retaining clip, generally indicated by the numeral 50, therein. Each aperture has an arcuate length of approximately 115° and are separated from each other by diametrically opposed arcuate sections of housing 47 which have parallel spaced inner surfaces. The arcuate sections each have an arcuate length held for approximately 65°. The sections secure clip 50 within housing 47, when the clip 50 is in an inserted position therein, as shown in Figs. 1 and 2 and described further below.

Clip 50 may be a rigid one piece member, preferably molded of a high strength plastic material. The clip 50 includes a pair of diametrically opposed arcuate members 51, 52, which are connected by spaced generally parallel sides 53. The end members 51, 52 and sides 53 form an elongated inner opening 54. A guide tab 55 is formed integrally with the leading end member 52 and extended outwardly in stepped relationship therefrom. End members 51, 52 and sides 53 form a relatively rigid member 57 having legs 58, which expand and contract to capture male end form F therebetween.

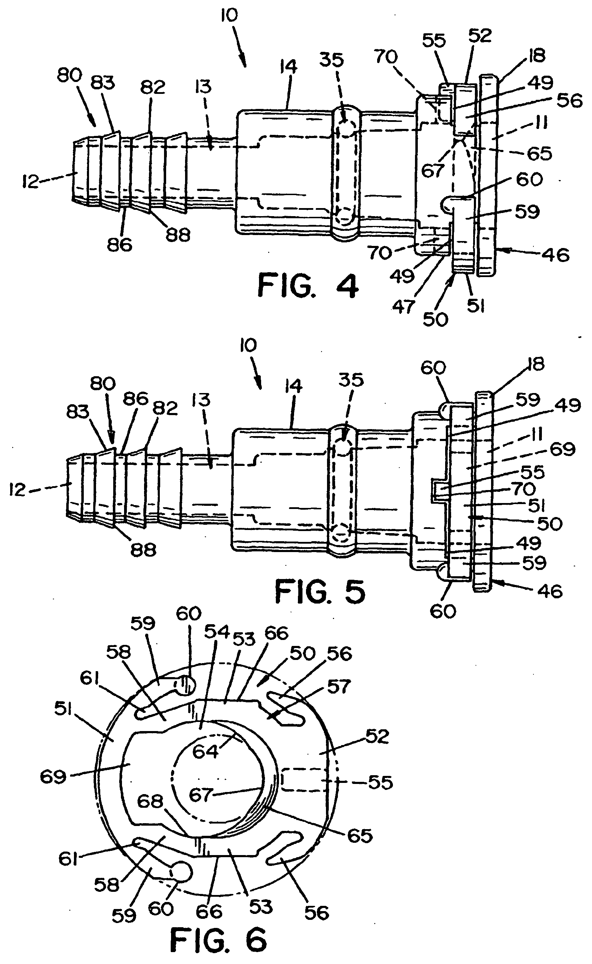

A pair of curved flexible fingers 59 extend outwardly from end 51 and include a partially circular nub 60 on an inner surface adjacent the extended fingers 59. Two pairs of partially circular shaped recesses 61 are formed at the junction of each finger 59 and end member 51 to provide increased flexibility between the fingers 59 and the end member 51. A chamffered surface 65 is formed in the front inner edge 64 of clip 50 to allow male end form F to slidably pass therethrough, as discussed further below. As shown in Fig. 6, sides 53 of clip 50 have generally flat outer edges 66, which extend parallel to each other. Furthermore, elongated inner opening 54 includes a reduced diameter arcuate portion at 67 adjacent arcuate end 64, which communicates with a larger diameter generally circular center portion at 68, which merges into a slotted portion at 69, which terminates at end member 51.

Referring to Fig. 1, male end form F is shown seated within inner opening 54. Conduit C shown is a mono-wall tube, although it is readily understood that it could be a multiple-wall member. Male end form F can be slidably inserted easily into opening 54 by applying a manual force thereto in the axial inward direction, where it forms a fluid tight seal with the sealing member 35 and is locked in position by the retainer clip 50. Thus, no additional attachments means of any kind is required to secure male end form F to connector 10.

The male end form F is installed easily within the open end of connector 10 by first inserting clip 50 into apertures 49 of the front housing 47 of latch end 46. The thickness of the end members 51, 52 and sides 53 is just slightly less than the width of apertures 49, and the distance between the outer flat edges 66 of side 53 is slightly less than the diametric distance between the parallel inner surfaces of apertures 49, to permit clip 50 to be slidably inserted through the apertures 49 into the position shown in Fig.4. When inserting clip 50 through apertures 49, tab 55 will move through a pair of diametrically opposed and aligned guide channels 70 formed in the cylindrical portion of the housing 47. The guide tab 55 ensures that the clip 50 can only be installed so the chamffered surface 65 faces outwardly for receiving the tapered end of the tubular conduit when inserted into the connector 10. However, it is readily understood that the clip 50 can be inserted from either direction into the connector 10 by the formation of a pair of opposed channels 70. However, regardless of which direction the clip 50 is inserted through the aperture, tab 55 ensures that the chamffered surfaces 65 always faces outwardly for receiving the tapered end E of male end form F.

To lock the male end form F within the connector, clip 50 is forced inward so that the enlarged generally circular center portion 68 of elongated opening is coaxial with open end 11 of connector 10. This enables annular latching flange 75, which has a diameter approximately equal to that of central portion, to pass therethrough with a generally tight sliding fit, until end portion E is seated within the bores of inner and outer members and in a fluid sealing engagement with sealing member 35, as shown in Fig. 1. Upon the release of force on end member of clip 50, the flexibility of fingers 59 will bias the clip 50 to the locked position of Fig. 2, wherein the smaller reduced diameter portion 67 of inner opening 54 leans into engagement with the male end form F and behind annular latching projection or flange 75 to lock the male end form F therein. To remove the male end form F from within the connector 10, the reverse operation is performed. Specifically, force is reapplied to end member 51, depressing fingers 59 with nubs 60 moving along surfaces providing a caming action therebetween, enabling the male end form F to be pulled from connector 10, whereby annular latching flange 75 moves through the complimentary shape and equal diameter of central portion 68 of clip opening 54.

Flexible tabs 56 snap behind end of housing 47 when clip 50 is in the locked position with tubular male end form F, to securely retain the clip 50 in the locked position. End member 51 is merely pushed inwardly, to release engagement with edge 70 permitting clip 50 to be moved to the unlocked position where enlarged central portion 68 aligns with the connector bore.

As an alternative to using a latch form retaining assembly, as described above, to retain a conduit C, a barbed retaining assembly, generally indicated by the numeral 80, and shown formed on the second tubular section 16 of connector 10, may be used to secure a flexible tubular member or generally a conduit C to connector 10. In the barbed assembly 80, a plurality of outwardly extending annular flanges 82 are provided. These flanges 82 have a positively sloped annular leading face 83, which causes expansion of the conduit as it is forced over retainer assembly 80 in a bayonet-type fashion. Preferably, the leading face 83 is molded such that it does not have a parting line reducing the likelihood of damage to the conduit C. The rear faces 88 of the flanges 82 are disposed to resist movement of the conduit in an axially outward direction. As will be described more completely below, a pin assembly 215 is used to position sealing member 35 within a mold cavity 204 used to form the connector 10. In this manner, the sealing member 35 may be introduced prior to the molding of the connector and thus be formed integrally with the connector 10. In this way the steps of subsequent assembly and insertion or formation seating member retaining inserts are obviated. This further allows the body 14 to be formed of a single material. To improve the seal at the barbed retaining assembly 80, a second seal member receiver, generally indicated by the numeral 90 may be formed on the second tubular section I6 to hold a second sealing member 91. In the embodiment shown, a recess 92 and an annular retaining flange 93 are formed proximate one of the barbed flanges 82 and spaced therefrom to provide a clearance for the second sealing member 91, which in this case is an elastomeric O-ring. Receiver recess 92 may be radi used such that it closely fits a circular cross-section sealing member 91. Retaining flange 93 may be provided with a positively sloped top surface similar to that of barbs 82 that facilitates passage of the conduit C over seal receiver 90. A portion of the sealing member 91 extends radially outwardly of the periphery of each of the flanges 82, to effect sealing contact with the conduit attached at the second end 16 of the connector 10.

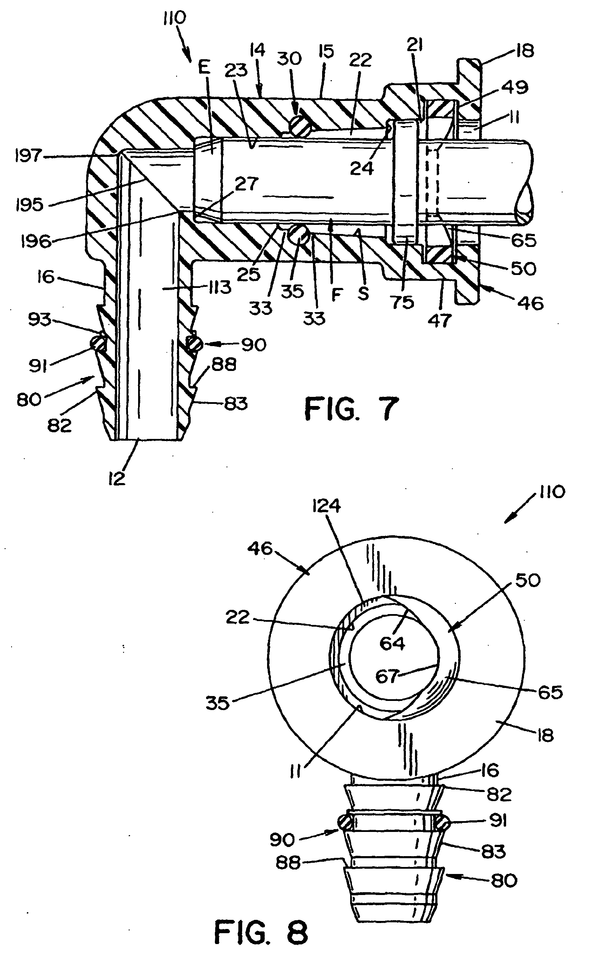

An alternative embodiment of the present invention is depicted in Figs. 7-8 and generally indicated by the numeral 110. In this embodiment, the connecter 110 is essentially identical to the previously described connector 10, using like numerals on like parts, with the exception that it is configured in the shape of an elbow, where the first tubular section 15 is disposed at a right angle to the second tubular section 16. Due to the orientation of the first tubular section and second tubular section, an angular flange 195 extends from the interior corner 196 within the bore 113 to the exterior corner 197 of the bore 113 to provide a stop for the pin assembly 215. It will be appreciated that if pin assembly 215 were fully inserted its bore would abut that interior surface of the connector 110, causing a restriction of fluid flow. By providing flange 195 fluid communication between the male end form F and the tubular section 27 is preserved. With this in mind, the male end form F may be provided with an angular tip to effect a close fit of the male end form F within the bore 113.

If desired, multiple sealing members 35, 90 may be utilized to further improve the sealing connection between the connector 10,110 and tubular members without affecting the concepts of the present invention.

A connector 10 is manufactured by an improved method, as shown particularly in Figs. 9-12. In the improved method, the sealing member 35 is integrally formed with the connector 10.

To manufacture a connector 10, a mold assembly, generally indicated by the numeral 200 in Figs. 9-12 may be used. It will be appreciated that connector 110 may be formed using the following method with slight modification of the mold assembly 200. In Fig. 9, the mold assembly 200 is shown open and includes a first die portion 201 a second die portion 202 and a third die portion 203 which defines a cavity 204 shaped to form the exterior features of a connector. An insert assembly, generally indicated by the numeral 205 defines a portion of the interior features of the connector. In the embodiment shown, a portion of the bore 13 of connector 10 is formed around a mandrel 206 supported on the third die-sections 203. As shown, the tip of a barbed retainer 80 may be defined in its entirety within third die section 203 to prevent the formation of a parting line on the leading surface 83 of retainer 80.

Returning to the insert assembly 205, the bore sections within connector 10 are formed by corresponding stepped surfaces 211, 212, and 213 on the insert assembly 205. Corresponding to the bore section 21, a generally cylindrical insert section 211 is provided adjacent a base section 210 to form the cylindrical bore section 21. Insert section 212 is stepped radially inward from section 211 to form flange 24 of connector 10. Section 212 may taper inwardly from section 211 defining a generally frustoconical section to create the sloped surface S. The tapered section 212 facilitates ejection of the connector from the mold. Sections 211 and 212 are made hollow and define a bore that receives a moveable pin assembly 215. The pin assembly 215 may be attached to the insert assembly 205 by a screw or other fastener 216, as shown. A first portion 217 of the pin assembly 215 is sized smaller than the bore defined by the first and second insert sections 211, 212 to provide clearance for a biasing member such as coil spring 218 shown. A second portion 219 of pin assembly 215 is received on the first portion 217 and has a diameter corresponding substantially to that of the bore defined by first and second sections 211, 212 of insert assembly 205 but sufficiently reduced to allow sliding movement within the bore. When the spring 218 is compressed, die wall 214 acts as a step for pin assembly 215, as described more completely below. A radially extending annular flange 220 divides the second portion 219 into a sealing member receiving portion 221 and mandrel receiving portion 222. Sealing member 35 is located on sealing member receiving portion 221 and abuts flange 220. The mandrel receiving portion 222 is provided with a recess or bore 223 adapted to receive at least a portion of mandrel 206 when the die 200 is closed.

As shown in Fig. 9, the sealing member 35 is initially spaced from the edge 224 of insert assembly 205 by a suitable clearance 225 to allow movement of the pin assembly 215, as will be described below.

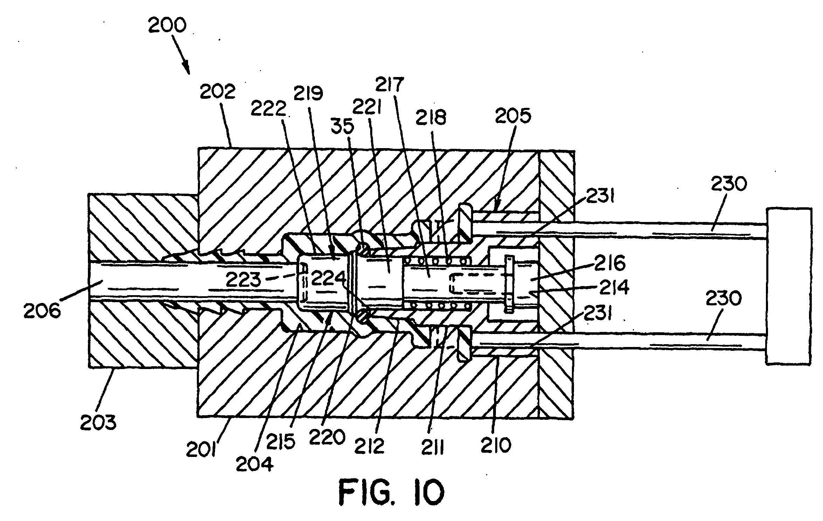

When the die is closed (Fig. 10), the sections 201, 202 cooperate to form a cavity 204 corresponding to the connector 10. The mandrel 206 is axially inserted into the first and second portions 201, 202 and seated within a portion 223 of the pin assembly 215. The insertion of mandrel 206 urges the pin assembly axially inward toward the base portion 210 of the insert assembly 205 compressing the spring 218. As the spring 218 is compressed, the sealing member 35 is brought into an engagement with the end 224 of the second insert section 212. As the mandrel 206 continues to move inwardly to a selected position, the sealing member 35 is compressed to a predetermined extent between the flange 220 and end 224 to prevent molten plastic material at injection pressures from being blown by the sealing member 35. The molten plastic material fills the mold 200 to form connector 10. Further, the material defines the sealing member receiver 30 around the sealing member 35 holding it in a loaded condition.

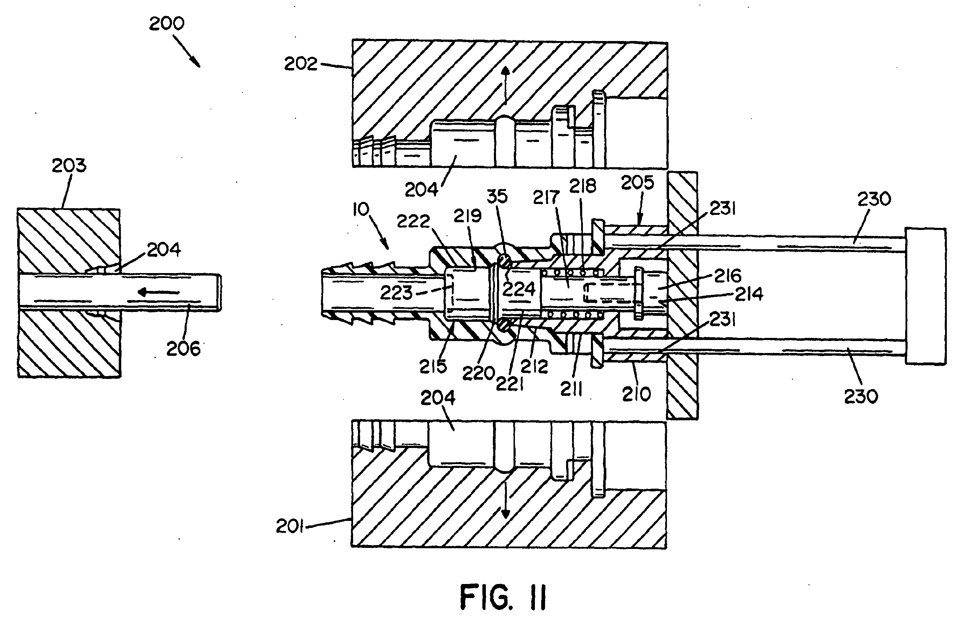

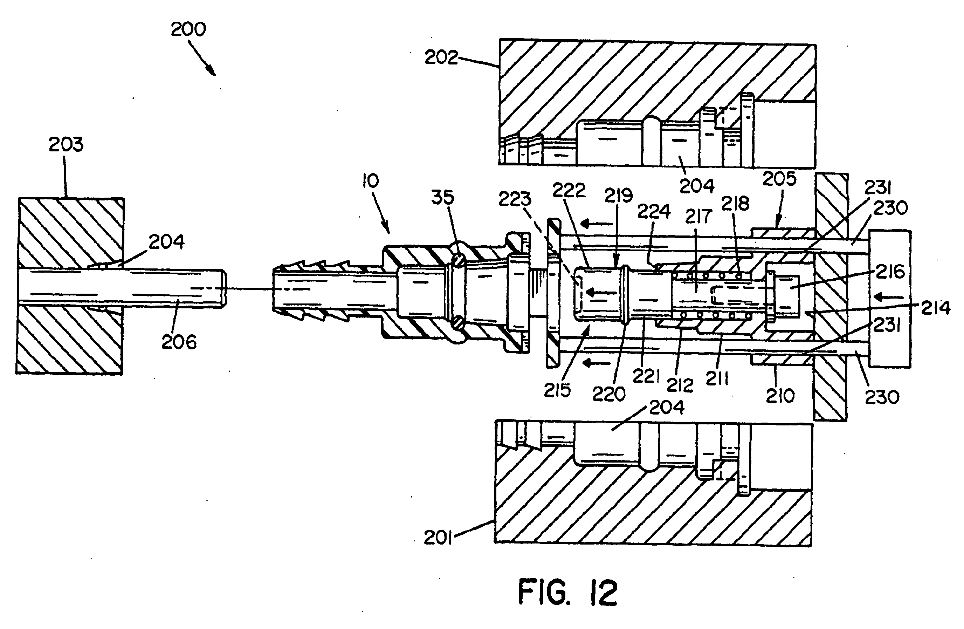

Once injection is complete, the mandrel 206 opens first followed by opening of the first and second mold sections 201, 202(Fig.11). Ejection pins 230 inserted through suitable receivers 231 formed in the base 210 of insert assembly 205 to push the completed connector 10 from the insert assembly 205(Fig. 12). As the connector 10 is ejected, the pin assembly 215 moves with the connector 10 for a short distance easing the release of the connector 10 from the insert assembly 205 by essentially releasing the connector 10 in two steps. The two step opening further provides additional clearance for the sealing ridge 220 to compress the sealing member 35 allowing the sealing member to pass over the ridge 220. Thus, the completed connector with integrally assembled sealing member 35 is ejected from the mold. After which, the ejector pins 230 retract and the molding process may begin anew.

Thus, it should be evident that the connector 10, 110 disclosed herein carries out one or more of the objects of the present invention set forth above and otherwise constitutes an advantageous contribution to the art. As will be apparent to persons skilled in the art, modifications can be made to the embodiments disclosed herein, the scope of the invention herein being limited solely by the scope of the attached claims.

## Claims

1. A connector comprising:
a hollow member having a first open end (11) and a second open end (12) joined by a bore (13);
said hollow member defining a sealing member receiver (30) housing an integrally assembled sealing member (35), wherein said sealing member receiver (30) is adapted to load said sealing member (35) such that a portion of said sealing member protrudes into said bore (13); and
at least one conduit retaining assembly (40) located at one of said ends;
wherein
said receiver includes a concave recess (31) formed in said member having opposing surfaces (33) between which said sealing member (35) is seated; **characterised in that**
said hollow member has a surface (5) adjacent said sealing member extending axially toward said first open end and radially outward to define a frustoconical bore section adjacent said sealing member (35).

2. The connector of claim 1, wherein said hollow member has an elbow configuration with a bend between said first open end and said second open end.

3. The connector of claim 2 further comprising a flange extending partially into said bore extending between a first corner of said bend to a second corner of said bend, whereby said flange prevents over insertion of conduit.

4. The connector of any preceding claim, wherein said bore opens radially outward adjacent one side of said sealing member defining a clearance for removal of an insert assembly during formation of said connector.

5. The connector of claim 4 further comprising a cylindrical bore section (21) adjacent said frustoconical bore section stepped radially outward by a shoulder separating said sections, said cylindrical bore section opening at said first open end (11).

6. The connector of any preceding claim further comprising generally cylindrical third bore section (23) stepped radially inward by an annular flange (25) inward from said frustoconical portion to an extent less than the protrusion of said sealing member into said bore.

7. The connector of any preceding claim further comprising a barbed conduit retaining assembly (80) having a plurality of barbs formed on said hollow member assembly adjacent said second end (12);
said barbed retaining assembly (80) defining a second sealing member receiver (90) located on an exterior of said hollow member adjacent one of said barbs;
a sealing member (91) carried by said second sealing member retainer;
wherein said second sealing member (91) is adapted to protrude radially outward of said barbs.

8. The connector of claim 7, wherein at least a portion of said barbed retainer is formed without a parting line.

## Patentansprüche

1. Verbinder, umfassend:
ein Hohlelement mit einem ersten offenen Ende (11) und einem zweiten offenen Ende (12), die durch eine Bohrung (13) miteinander verbunden sind;
wobei das genannte Hohlelement eine Dichtungselementaufnahme (30) definiert, das ein einstückig zusammengefügtes Dichtungselement (35) aufnimmt, wobei die genannte Dichtungselementaufnahme (30) ausgeführt ist, um das genannte Dichtungselement (35) so zu beanspruchen, dass ein Abschnitt des genannten Dichtungselements in die genannte Bohrung (13) vorspringt; und
wenigstens eine an einem der genannten Enden befindliche Leitungshaltebaugruppe (40);
wobei die genannte Aufnahme eine in dem genannten Element ausgebildete konkave Aussparung (31) mit einander entgegengesetzten Oberflächen (33) hat, zwischen denen das genannte Dichtungselement (35) sitzt;
**dadurch gekennzeichnet, dass** das genannte Hohlelement eine Oberfläche (5) neben dem genannten Dichtungselement hat, die axial in Richtung auf das genannte erste offene Ende und radial nach außen verläuft, um einen kegelstumpfförmigen Bohrungsabschnitt neben dem genannten Dichtungselement (35) zu definieren.

2. Verbinder nach Anspruch 1, bei dem das genannte Hohlelement eine Kniekonfiguration mit einer Krümmung zwischen dem genannten ersten offenen Ende und dem genannten zweiten offenen Ende hat.

3. Verbinder nach Anspruch 2, der ferner einen teilweise in die genannte Bohrung verlaufenden Flansch umfasst, der zwischen einer ersten Ecke der genannten Krümmung und einer zweiten Ecke der genannten Krümmung verläuft, wodurch der genannte Flansch verhütet, dass die Leitung zu weit eingesteckt wird.

4. Verbinder nach einem der vorhergehenden Ansprüche, bei dem die genannte Bohrung sich neben einer Seite des genannten Dichtungselements radial nach außen öffnet, wobei es einen Zwischenraum zum Entfernen einer Einsatzbaugruppe während des Formens des genannten Verbinders definiert.

5. Verbinder nach Anspruch 4, der ferner einen zylindrischen Bohrungsabschnitt (21) neben dem genannten kegelstumpfförmigen Bohrungsabschnitt umfasst, der durch einen die genannten Abschnitte trennenden Absatz radial nach außen abgestuft ist, wobei sich der zylindrische Bohrungsabschnitt an dem genannten ersten offenen Ende (11) öffnet.

6. Verbinder nach einem der vorhergehenden Ansprüche, der ferner einen allgemein zylindrischen dritten Bohrungsabschnitt (23) umfasst, der durch einen ringförmigen Flansch (25) einwärts von dem genannten kegelstumpfförmigen Abschnitt in einem kleineren Grad als der Vorsprung des genannten Dichtungselements in die genannte Bohrung radial nach innen abgestuft ist.

7. Verbinder nach einem der vorhergehenden Ansprüche, ferner umfassend eine mit Widerhaken versehene Leitungshaltebaugruppe (80), die eine Mehrzahl von Widerhaken hat, die an der genannten Hohlelementbaugruppe neben dem genannten zweiten Ende (12) ausgebildet sind;
wobei die genannte mit Widerhaken versehene Haltebaugruppe (80) eine zweite Dichtungselementaufnahme (90) definiert, die sich an einem Äußeren des genannten Hohlelements neben einem der genannten Widerhaken befindet;
ein von dem genannten zweiten Dichtungselementhalter getragenes Dichtungselement (91);
wobei das genannte zweite Dichtungselement (91) ausgeführt ist, um von den genannten Widerhaken radial nach außen vorzuspringen.

8. Verbinder nach Anspruch 7, bei dem wenigstens ein Abschnitt des genannten mit Widerhaken versehenen Halters ohne eine Trennlinie ausgebildet ist.

## Revendications

1. Connecteur comprenant :
un élément creux ayant une première extrémité ouverte (11) et une seconde extrémité ouverte (12) reliées par un alésage (13) ;
ledit élément creux délimitant un siège (30) pour élément obturateur, qui contient un élément obturateur (35) assemblé intégralement, dans lequel ledit siège d'élément obturateur (30) est adapté pour charger ledit élément obturateur (35) de sorte qu'une partie dudit élément obturateur fait saillie dans l'intérieur dudit alésage (13) ; et
au moins un ensemble de retenue de conduit (40) situé à l'une desdites extrémités ; dans lequel
ledit siège comprend un évidement concave (31) formé dans ledit élément ayant des surfaces (33) opposées entre lesquelles ledit élément obturateur (35) est calé ;
**caractérisé en ce que**
ledit élément creux a une surface (5), adjacente audit élément obturateur, qui s'étend axialement vers ladite première extrémité ouverte et radialement vers l'extérieur pour délimiter une section d'alésage tronconique adjacente audit élément obturateur (35).

2. Le connecteur selon la revendication 1, dans lequel ledit élément creux a une configuration coudée, avec un coude entre ladite première extrémité ouverte et ladite seconde extrémité ouverte.

3. Le connecteur selon la revendication 2, qui comprend de plus une bride qui s'étend en partie à l'intérieur dudit alésage, en se prolongeant entre un premier angle dudit coude et un second angle dudit coude, de sorte que ladite bride empêche toute insertion excessive du conduit.

4. Le connecteur selon l'une quelconque des revendications précédentes, dans lequel ledit alésage s'ouvre radialement vers l'extérieur à proximité d'un côté dudit élément obturateur, délimitant ainsi un dégagement pour l'extraction d'un ensemble rapporté pendant la formation dudit connecteur.

5. Le connecteur selon la revendication 4, qui comprend de plus une section d'alésage cylindrique (21), adjacente à ladite section d'alésage tronconique, étagée radialement vers l'extérieur par un épaulement qui sépare lesdites sections, ladite section d'alésage cylindrique s'ouvrant au niveau de ladite première extrémité ouverte (11).

6. Le connecteur selon l'une quelconque des revendications précédentes, qui comprend de plus une troisième section (23) d'alésage généralement cylindrique étagée radialement vers l'intérieur par une bride annulaire (25) qui s'étend vers l'intérieur depuis ladite partie tronconique, sur une distance inférieure à celle de la saillie dudit élément obturateur à l'intérieur dudit alésage.

7. Le connecteur selon l'une quelconque des revendications précédentes, qui comprend de plus un ensemble de retenue barbelé (80) pour conduits ayant une pluralité de barbelures formées sur ledit ensemble à élément creux à proximité de ladite seconde extrémité (12) ;
ledit ensemble de retenue barbelé (80) délimitant un second siège (90) pour élément obturateur, placé sur une partie extérieure dudit élément creux adjacent à l'une de ces barbelures ;
un élément obturateur (91) porté par ledit second ensemble de retenue d'élément obturateur ;
dans lequel ledit second élément obturateur (91) est adapté pour faire saillie radialement à l'extérieur desdites barbelures.

8. Le connecteur selon la revendication 7, dans lequel une partie au moins dudit élément de retenue barbelé est formé sans ligne de séparation.
